# EUROPEAN PATENT APPLICATION

(11) **EP 4 230 752 A1**
(43) Date of publication of application: **23.08.2023**
(21) Application number: 23155581.4
(22) Date of filing: 08.02.2023
(51) Int. Cl.: C22B 3/16, C01G 53/00, C01G 53/10, C22B 3/40, C22B 3/00

(54) **METHOD FOR LEACHING NICKEL FROM NICKEL ORE AND METHOD FOR PRODUCING NICKEL SULFATE**

(30) Priority: 16.02.2022 JP 2022021869
(71) Applicant: Prime Planet Energy & Solutions, Inc., Chuo-ku Tokyo 103-0022 (JP); Kyushu University, National University Corporation, Nishi-ku Fukuoka-shi Fukuoka 819-0395 (JP); Toyota Tsusho Corporation, Nagoya-shi Aichi-ken 450-8575 (JP); TOYOTA JIDOSHA KABUSHIKI KAISHA, Aichi-Ken 471-8571 (JP)
(72) Inventor: YAMAMOTO, Yuji, Tokyo, 103-0022 (JP); GOTO, Masahiro, Fukuoka-ken, 819-0395 (JP); HANADA, Takafumi, Fukuoka-ken, 819-0395 (JP); MORIYAMA, Takeru, Aichi-ken, 450-8575 (JP); OHSAWA, Ryosuke, Aichi-ken, 471-8571 (JP)
(74) Representative: Kuhnen & Wacker Patent- und Rechtsanwaltsbüro PartG mbB

(57) **Abstract**

Provided is a method for leaching nickel from a nickel oxide ore that enables a nickel sulfate production method which is easily carried out with a small amount of waste generation. The method for leaching nickel into an organic phase disclosed here includes the step of bringing a nickel ore into contact with an organic phase. The organic phase contains a hydrophobic deep eutectic solvent including a hydrogen bond donor and a hydrogen bond acceptor, and an organic acid. The hydrogen bond donor is an acidic hydrogen bond donor. The organic acid is a strong acid.

## Description

### TECHNICAL FIELD

The present teaching relates to a nickel leaching method for leaching nickel from a nickel ore into an organic phase. The present teaching also relates to a method for producing nickel sulfate using the nickel leaching method.

### BACKGROUND

There has been an increasing demand for lithium ion secondary batteries in recent years. Many positive electrode active materials of lithium ion secondary batteries contain nickel, as exemplified by lithium nickel cobalt manganese composite oxide and lithium nickel cobalt aluminium composite oxide. On the other hand, nickel is also used for, for example, stainless steel and special steel, and the demand for these materials is also increasing. For this reason, the demand for nickel is rapidly increasing, and importance of a method for obtaining a nickel source (especially nickel sulfate) is increasing.

Examples of known methods for obtaining a nickel source include: a neutralization method in which a nickel oxide ore is acid-leached to obtain an acidic solution, a neutralizer is added to the acidic solution, and a neutralized precipitate containing generated impurity elements and a neutralizing solution are subjected to solid-liquid separation (see, for example, Patent Document 1); and a solvent extraction method in which a nickel oxide ore is acid-leached to obtain an acidic solution, an extracting solvent is added to the acidic solution, nickel sulfate is caused to move to an organic phase by solvent extraction, and back extraction is further performed (see, for example, Patent Document 2).

### CITATION LIST

### PATENT REFERENCE

Patent Document 1: Japanese Patent No. 5060033
Patent Document 2: Japanese Patent Application Publication No. 2013-100204

### SUMMARY OF THE INVENTION

In the neutralization method described above, the neutralized precipitate containing the impurity elements is waste, and thus, the method has the drawback of a large amount of waste generation. On the other hand, the solvent extraction method described above has the necessity for performing a large number of processes such as acid leaching, solvent extraction, and back extraction, and thus, the problem of complexity of the method arises.

It is therefore an object of the present teaching to provide a nickel sulfate production method that is easily carried out with a small amount of waste production, and a method for leaching nickel from a nickel oxide ore that enables the nickel sulfate production method.

A method for leaching nickel into an organic phase disclosed here includes the step of bringing a nickel ore into contact with an organic phase. The organic phase contains a hydrophobic deep eutectic solvent and an organic acid, and the hydrophobic deep eutectic solvent includes a hydrogen bond donor and a hydrogen bond acceptor. The hydrogen bond donor is an acidic hydrogen bond donor. The organic acid is a strong acid. With this constitution, fabrication of nickel sulfate can be made easier with a small amount of industrial waste generation by especially the fabrication method disclosed here, which will be described later.

In a desired aspect of the leaching method, a mass proportion of the organic acid with respect to the hydrophobic deep eutectic solvent is 9 mass% or more and 20 mass% or less. This constitution especially increases the leaching rate of nickel from the nickel ore into the organic phase.

In a desired aspect of the leaching method, the hydrogen bond donor is a fatty acid, and the hydrogen bond acceptor is a quaternary ammonium halide. In a desired aspect of the leaching method, the organic acid is an organic sulfonic acid compound.

In another aspect, a method for producing nickel sulfate disclosed here includes the steps of: obtaining a nickel leachate by the leaching method described above; and obtaining an aqueous phase containing nickel sulfate by performing back extraction on the nickel leachate using sulfuric acid. This constitution enables nickel sulfate to be produced through two steps that can be easily carried out. In addition, since the organic phase can be reused, the amount of generation of waste can be reduced. That is, this constitution reduces the amount of waste generation and eases the production method.

In a desired aspect of the production method described above, in the step of obtaining the aqueous phase, a concentration of sulfuric acid is 2 mol/L or more. This constitution enables nickel sulfate with high purity to be obtained with a small amount of contamination of a Fe component.

In a desired aspect of the production method described above, in the step of obtaining the aqueous phase, back extraction is performed after the nickel leachate is diluted with a hydrophobic organic solvent. This constitution enables nickel sulfate with high purity to be obtained with a small amount of contamination of a Fe component. In addition, productivity of nickel sulfate can be enhanced by adjusting the viscosity of the leachate by dilution.

### BRIEF DESCRIPTION OF THE DRAWINGS

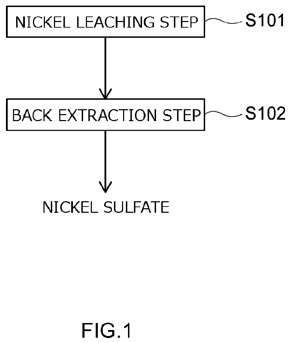

FIG. 1 is a flowchart depicting each step of a method for producing nickel sulfate according to the present teaching.

### DETAILED DESCRIPTION OF THE PREFERRED EMBODIMENT

An embodiment of the present teaching will be described hereinafter with reference to the drawing. Matters not specifically mentioned herein but required for carrying out the present teaching can be understood as matters of design variation of a person skilled in the art based on related art in the field. The present teaching can be carried out on the basis of the contents disclosed in the description and common general knowledge in the field. A numerical range expressed as "A to B" herein includes A and B.

A method for leaching nickel into an organic phase according to this embodiment includes the step of bringing a nickel ore into contact with an organic phase. The organic phase contains a hydrophobic deep eutectic solvent including a hydrogen bond donor and a hydrogen bond acceptor, and an organic acid. The hydrogen bond donor is an acidic hydrogen bond donor. The organic acid is a strong acid. A nickel sulfate production method using the method for leaching nickel into an organic phase according to this embodiment includes the step (nickel leaching step) S101 of obtaining a nickel leachate by the method for leaching nickel into an organic phase according to this embodiment and the step (back extraction step) S102 of performing back extraction on the nickel leachate using sulfuric acid to obtain an aqueous phase containing sulfuric acid, as illustrated in FIG. 1. Each of the steps will be described in detail hereinafter.

### <Nickel Leaching Step S101>

In the nickel leaching step S101, a method for leaching nickel into an organic phase according to this embodiment is carried out. Specifically, solid-liquid extraction is performed by using a special organic phase so that nickel (Ni) is caused to move from a nickel ore to an organic phase.

The nickel ore used in the step S101 (i.e., the method according to this embodiment) is desirably a nickel oxide ore, but is not limited to the nickel oxide ore. The nickel oxide ore is not specifically limited as long as the nickel oxide ore is an oxide ore containing nickel. Examples of the nickel oxide ore include a limonite ore and a saprolite ore. The nickel oxide ore typically contains nickel oxide (NiO) and iron oxide (Fe₂O₃) as constituents.

The nickel ore may have been subjected to processes such as pulverization and classification. By performing the processes such as pulverization and classification on the nickel ore, the particle size of the nickel ore can be adjusted to a predetermined range (e.g., a median particle diameter D50 determined by a laser diffraction/scattering method of 0.01 to 1000 pm, desirably 1 to 100 pm), thereby enhancing leaching efficiency. The processes such as pulverization or classification can be performed in accordance with known methods.

In a conventional technique, leaching of nickel from a nickel ore uses an acid solution such as sulfuric acid. On the other hand, this embodiment uses a hydrophobic deep eutectic solvent. Thus, the conventional technique performs leaching using an aqueous phase, whereas this embodiment performs leaching using an organic phase.

The "deep eutectic solvent" herein refers to a mixture that includes a hydrogen bond donor and a hydrogen bond acceptor at least of which is solid at 25°C, and that is a solvent that is liquid at 25°C. Specifically, although the deep eutectic solvent includes a substance that is solid at 25°C, when a hydrogen bond donor and a hydrogen bond acceptor are mixed at a predetermined mixture ratio, a eutectic melting point drop occurs, and the deep eutectic solvent is liquid at 25°C. The deep eutectic solvent is not necessarily composed only of ions because of inclusion of the hydrogen bond donor, and thus, is different from ionic liquid in a strict sense. The deep eutectic solvent is advantageous in easiness of being composed of a substance having a low environmental load, as compared to ionic liquid.

The "hydrophobic deep eutectic solvent" herein refers to a deep eutectic solvent that causes phase separation between an aqueous phase and a hydrophobic deep eutectic solvent phase when the deep eutectic solvent is in contact with water at 25°C. A solubility of the hydrophobic deep eutectic solvent in water at 25°C is desirably 1 g/100mL or less, more desirably 0.1 g/100mL or less, and even more desirably 0.01 g/100mL or less.

The hydrogen bond donor included in the hydrophobic deep eutectic solvent used in the step S101 is an acidic hydrogen bond donor. The acidic hydrogen bond donor has a strong force of releasing protons, which is supposed to contribute to leaching of nickel. It should be noted that the expression "hydrogen bond donor is acidic" herein means that the hydrogen bond donor has an acid dissociation constant (pKa) less than 7. The acid dissociation constant (pKa) of the hydrogen bond donor is desirably 6 or less, and more desirably 5 or less. The acid dissociation constant (pKa) of the hydrogen bond donor may be 0 or more, 1 or more, or 2 or more. It should be noted that the acid dissociation constant (pKa) herein is a value at 25°C in water, and can be determined by a known method (i.e., acid-base titration).

Examples of the acidic hydrogen bond donor include a carboxy group-containing compound. Examples of the carboxy group-containing compound include: fatty acids such as formic acid, acetic acid, butanoic acid, pentanoic acid, hexanoic acid, heptanoic acid, octanoic acid, nonanoic acid, decanoic acid, dodecanoic acid, tetradecanoic acid, pentadecanoic acid, hexadecanoic acid, heptadecanoic acid, octadecanoic acid, eicosanoic acid, docosanoic acid, tetracosanoic acid, hexacosanoic acid, octacosanoic acid, and triacontanoic acid; polyvalent carboxylic acid compounds such as oxalic acid, malonic acid, succinic acid, adipic acid, itaconic acid, suberic acid, and 1,2,3-propanetricarboxylic acid; aromatic carboxylic acid compounds such as benzoic acid; aromatic compounds having carboxy group-containing substituents such as phenylacetic acid, 3-phenyl propionic acid, and trans-cinnamic acid; levulinic acid; and carboxy group-containing compounds having a hydroxy group(s) such as lactic acid, tartaric acid, ascorbic acid, citric acid, 4-hydroxy benzoic acid, p-coumaric acid, caffeic acid, and gallic acid.

These materials may be used alone or two or more of them may be used in combination as the hydrogen bond donor.

The hydrogen bond donor is desirably a fatty acid, more desirably a fatty acid having a carbon number of 8 to 12, and even more desirably decanoic acid.

Examples of the hydrogen acceptor included in the hydrophobic deep eutectic solvent used in the step S101 include a haloid salt.

Examples of the haloid salt include a quaternary ammonium halide, a quaternary phosphonium halide, a tertiary ammonium halide, and a primary ammonium halide.

Examples of the quaternary ammonium halide include choline chloride, tetrabutylammonium chloride, tetramethylammonium chloride, methyltrioctylammonium chloride, tetraoctylammonium chloride, acetylcholine chloride, chlorocholine chloride, tetraethylammonium bromide, N-(2-hydroxyethyl)-N,N-dimethyl benzenemethanaminium chloride, fluorocholine bromide, and tetrabutylammonium bromide.

Examples of the quaternary phosphonium halide include methyltriphenylphosphonium bromide and benzyltriphenylphosphonium chloride.

Examples of the tertiary ammonium halide include 2-(diethylamino)ethanol hydrochloride.

Examples of the primary ammonium halide include ethylamine hydrochloride.

These materials may be used alone or two or more of them may be used in combination as the hydrogen bond acceptor.

The hydrogen bond acceptor is desirably a quaternary ammonium halide, and more desirably tetrabutylammonium chloride.

The deep eutectic solvent can be prepared in accordance with a known method. For example, a deep eutectic solvent can be prepared by dry-blending the hydrogen bond donor and the hydrogen bond acceptor, and stirring or kneading them at or above a eutectic point of the deep eutectic solvent. Alternatively, a deep eutectic solvent can be prepared by dissolving the hydrogen bond donor and the hydrogen bond acceptor in a solvent and then removing the solvent.

The organic phase includes an organic acid, and the organic acid is a strong acid. The "strong acid" herein refers to an acid having a pKa less than zero. Desired examples of the organic acid used in the step S101 include organic sulfonic acid compounds such as methanesulfonic acid (pKa = -1.9), benzenesulfonic acid (pKa = -2.8), and p-toluenesulfonic acid (pKa = -2.8).

The proportion of the organic acid in the deep eutectic solvent is not specifically limited. The mass proportion of the organic acid with respect to the deep eutectic solvent is, for example, 6 mass% or more. From the viewpoint of a high nickel leaching rate, the mass proportion of the organic acid with respect to the deep eutectic solvent is desirably 7 mass% or more, more desirably 8 mass% or more, much more desirably 9 mass% or more, and even more desirably 10 mass% or more. On the other hand, the mass proportion of the organic acid with respect to the deep eutectic solvent is, for example, 30 mass% or less, desirably 25 mass% or less, and more desirably 20 mass% or less.

The organic phase may consist only of the hydrophobic deep eutectic solvent and the organic acid. The organic phase may contain components other than the hydrophobic deep eutectic solvent and the organic acid within a range that does not significantly impair advantages of the present teaching (e.g., less than 10 mass%, less than 5 mass%, or less than 1 mass% in the organic phase). Examples of the other components include water, a reducing agent, an oxidizing agent, other organic solvents, and various additives.

The amount of the organic phase used with respect to the nickel ore is not specifically limited. The amount of the organic phase used with respect to 100 parts by mass of the nickel ore is, for example, 10 to 100000 parts by mass, and desirably 100 to 10000 parts by mass.

The nickel ore and the organic phase may be brought into contact with each other in accordance with a known method. For example, the contact may be performed by feeding a nickel ore in a vessel and then feeding an organic phase including a mixture of the hydrophobic deep eutectic solvent and the organic acid in the vessel. However, the order of feeding the nickel ore, the hydrophobic deep eutectic solvent, and the organic acid in the vessel is not limited. Since the strong organic acid is used, a vessel having acid resistance is desirably used.

In bringing the nickel ore and the organic phase into contact, a mixture of the nickel ore and the organic phase may be stirred. The stirring may be performed by a known method (e.g., a method using a stirring device including a stirrer, a stirring impeller, and the like). In bringing the nickel ore and the organic phase into contact, ultrasonic waves may be applied.

The contact between the nickel ore and the organic phase can be performed at room temperature (specifically 25°C). From the viewpoint of increasing the leaching rate, heating may be performed in bringing the nickel ore and the organic phase into contact. The heating may be performed on the vessel by a known device such as an oil bath, a mantle heater, a band heater (e.g., ribbon heater), or a plane heater (e.g., film heater or silicon rubber heater). The heating temperature is not specifically limited, and is desirably 40°C or more, more desirably 50°C or more, and even more desirably 60°C or more. On the other hand, from the viewpoint of energy efficiency, the heating temperature is desirably 100°C or less, more desirably 80°C or less, and even more desirably 70°C or less.

In bringing the nickel ore and the organic phase into contact, pressurization may be performed. The pressurization may be performed in accordance with a known method.

The time in which the nickel ore and the organic phase are brought into contact is not specifically limited, and can be appropriately determined depending on the type of the hydrophobic deep eutectic solvent used, the type and amount of the organic acid, the particle size of the nickel ore, the temperature, and so forth. The time in which the nickel ore and the organic phase are brought into contact is, for example, one minute to 100 hours, and desirably one hour to 50 hours.

After the contact, the organic phase including leached nickel (i.e., nickel leachate) can be collected by a known solid-liquid separation method (e.g., filtration).

### <Back Extraction Step S102>

In the back extraction step S102, back extraction is performed by using sulfuric acid as an extractant (i.e., aqueous phase). That is, nickel that has moved from the nickel ore to the organic phase is caused to move to an aqueous phase. Sulfuric acid also serves as an anion (SO₄²⁻) source of nickel sulfate.

The concentration of sulfuric acid is not specifically limited as long as nickel can move to the aqueous phase, and is, for example, 1 mol/L (1M) or more. Here, the nickel ore can include iron oxide (Fe₂O₃). In particular, the nickel oxide ore typically includes iron oxide. In the back extraction step S102, the use of high-concentration sulfuric acid can suppress movement of Fe to the aqueous phase. That is, nickel sulfate with a less contamination of an iron component can be obtained. From this viewpoint, the concentration of sulfuric acid is desirably 1.5 mol/L or more, more desirably 2 mol/L or more, much more desirably 2.5 mol/L or more, and even more desirably 3 mol/L or more. The upper limit of the concentration of sulfuric acid is not specifically limited, and is determined by technical limit. The concentration of sulfuric acid may be 15 mol/L or less, 10 mol/L or less, 7.5 mol/L or less, or 5 mol/L or less.

In this step, back extraction by sulfuric acid may be performed after the nickel leachate is diluted with a hydrophobic organic solvent. By diluting the nickel leachate with the organic solvent, movement of Fe to the aqueous phase can be suppressed, and nickel sulfate with a less contamination of an iron component can be obtained. In addition, this dilution enables adjustment of the viscosity of the nickel leachate, and thus, back extraction can be more easily performed, and productivity can also be enhanced. In particular, in a case where the nickel leachate (or hydrophobic deep eutectic solvent) has a high viscosity (e.g., a case where the hydrogen bond adaptor is tetrabutylammonium chloride), productivity can be further enhanced.

The hydrophobic organic solvent is desirably hydrocarbons, and examples of the hydrocarbons include aliphatic hydrocarbons such as hexane, heptane, octane, nonane and decane, and aromatic hydrocarbons such as benzene and toluene. Among these, aromatic hydrocarbons are desirable, and toluene is more desirable.

The amount of the hydrophobic organic solvent used is not specifically limited, and may be determined as appropriate in accordance with the viscosity of the leachate. The amount of the hydrophobic organic solvent used is, for example, 1 to 100 vol.% and desirably 5 to 50 vol.% with respect to the leachate.

The extractant (i.e., aqueous phase) may contain a component other than sulfuric acid within a range that does not significantly impair advantages of the present teaching (e.g., less than 10 mass%, less than 5 mass%, or less than 1 mass%).

The amount of sulfuric acid used with respect to the nickel leachate is not specifically limited. The ratio (volume ratio) of leachate : sulfuric acid is, for example, 1 : 0.05 to 20, and is desirably 1 : 0.2 to 5.

The back extraction can be performed in accordance with a known method. After the back extraction, the aqueous phase is collected, thereby obtaining a solution containing nickel sulfate.

From the solution containing nickel sulfate, nickel sulfate is crystallized and collected in accordance with a known method, thereby obtaining nickel sulfate.

For some applications of nickel sulfate, nickel sulfate may be collected in the state of an aqueous solution without precipitation of nickel sulfate from the solution containing nickel sulfate. In this case, the solution containing nickel sulfate may be used without change for an intended application, or may be used after a treatment such as neutralization.

Through the foregoing steps, nickel sulfate can be produced from the nickel ore. In the production method described above, nickel sulfate can be produced only by performing at least two steps of the leaching step S101 and the back extraction step S102. Thus, the production method described above requires a small number of steps and, in addition, operation in the method is easy. In addition, since the organic phase can be reused, the amount of waste generation can be reduced. Thus, the method for producing nickel sulfate is easy to be carried out with a small amount of waste generation.

Furthermore, as a nickel source for a positive electrode active material of a lithium ion secondary battery, nickel sulfate is used in most cases. Thus, the method for producing nickel sulfate described above has a high industrial value as a new method for obtaining nickel sulfate of a nickel source for a positive electrode active material of a lithium ion secondary battery.

### [Examples]

Examples of the present teaching will now be described, but are not intended to limit the present technique to these examples.

### [Study of nickel leaching method: Examples 1 to 6 and Comparative Examples 1 to 10]

A deep eutectic solvent including a hydrogen bond donor and a hydrogen bond acceptor, other solvents, and an organic acid shown in Table 1 were prepared. These materials were used to prepare an extractant (organic phase) containing components shown in Table 1.

A predetermined weight of a nickel oxide ore was placed in a vessel having a stirring impeller, and an extractant was further added to the vessel, and the resulting mixture was stirred. After a lapse of a predetermined time, the amount of weight reduction of the nickel oxide ore was determined, and based on this amount, a leaching rate of nickel was calculated. Table 1 shows the results.

**[Table 1]**

| | Deep Eutectic Solvent | | Other Solvents | Organic Acid | | Leaching Rate (wt%/h) |
|---|---|---|---|---|---|---|
| | hydrogen bond donor | hydrogen bond acceptor | | type | amount (mass%) | |
| Comparative Example 1 | decanoic acid | LIX-63 | - | | | 0.8 |
| Comparative Example 2 | decanoic acid | TBAC | - | | | 0.2 |
| Comparative Example 3 | HBTA | TOPO | - | | | 0.2 |
| Comparative Example 4 | decanoic acid | TOMAC | - | | | 0.7 |
| Comparative Example 5 | - | - | - | PTSA | 10 | 0.0 |
| Comparative Example 6 | - | - | water | PTSA | 10 | 2.0 |
| Comparative Example 7 | - | - | dodecane | PTSA | 10 | 0.0 |
| Comparative Example 8 | decanoic acid | TBAC | - | p-toluic acid | 10 | 0.0 |
| Comparative Example 9 | decanoic acid | TBAC | water | p-toluic acid | 10 | 0.1 |
| Comparative Example 10 | PhOH | TOMAC | - | PTSA | 10 | 2.0 |
| Example 1 | decanoic acid | TBAC | - | PTSA | 7.5 | 3.3 |
| Example 2 | decanoic acid | TBAC | - | PTSA | 10 | 4.0 |
| Example 3 | decanoic acid | TBAC | - | PTSA | 12.5 | 3.7 |
| Example 4 | decanoic acid | TBAC | - | PTSA | 15 | 3.7 |
| Example 5 | decanoic acid | TBAC | - | PTSA | 20 | 3.7 |
| Example 6 | decanoic acid | TOMAC | - | PTSA | 10 | 4.0 |

Abbreviation in Table 1 is as follows.
HBTA: benzoyl trifluoroacetone
PhOH: 4-(1,1,3,3-tetramethylbutyl)phenol
LIX-63: 7-hydroxy-5,8-diethyl-6-dodecanone oxime
TBAC: tetramethylammonium chloride
TOPO: trioctylphosphine oxide
TOMAC: methyltrioctylammonium chloride
PTSA: p-toluenesulfonic acid

In Comparative Examples 1 to 4, solid-liquid extraction was performed only with a deep eutectic solvent. In this case, the nickel leaching rate was low, and thus, these comparative examples were impractical. In Comparative Examples 5 to 7, nickel was leached by using acid. In these comparative examples, in a case where acid was included in an aqueous phase, nickel was slowly leached. In Comparative Examples 8 and 9, solid-liquid extraction was performed by using a deep eutectic solvent including an acidic hydrogen bond donor, and p-toluic acid (pKa = 4.36) that is weak acid. In this case, nickel was hardly leached. In Comparative Example 10, solid-liquid extraction was performed by using a deep eutectic solvent including a nonacidic hydrogen bond donor, and p-toluenesulfonic acid (pKa = -2.8) that is a strong acid. In this case, nickel was slowly leached.

On the other hand, in Examples 1 to 6 in each of which solid-liquid extraction was performed by using a hydrophobic deep eutectic solvent including an acidic hydrogen bond donor, and p-toluenesulfonic acid that is a strong acid, nickel was leached from a nickel ore at a high rate. Thus, from the results shown in Table 1, it can be understood that an organic phase including a hydrophobic deep eutectic solvent having an acidic hydrogen bond donor, and an organic acid that is a strong acid enables leaching of nickel at a high rate, which is sufficient for practical use.

### [Study 1 on nickel sulfate production method: Examples 8 to 12 and Comparative Examples 11 to 14]

Nickel was extracted from a nickel oxide ore using an organic phase containing components shown in Table 2. Next, back extraction was performed by using an extraction solution shown in Table 2, and an aqueous phase was collected. A quantitative analysis of components included in the aqueous phase was preformed, and each proportion of Ni and Fe that have moved from a leachate to the aqueous phase (aqueous phase extraction proportion) was determied. Table 2 shows results.

**[Table 2]**

| | Deep Eutectic Solvent | | Organic Acid | | Back Extraction Extraction Solution | Aqueous Phase Extraction Proportion (mass%) | |
|---|---|---|---|---|---|---|---|
| | hydrogen bond donor | hydrogen bond acceptor | type | amount (mass%) | | Ni | Fe |
| Comparative Example 11 | decanoic acid | TBAC | PTSA | 10 | water | 100 | 45 |
| Comparative Example 12 | decanoic acid | TBAC | PTSA | 10 | 0.5M Na₂SO₄ | 100 | 90 |
| Comparative Example 13 | decanoic acid | TBAC | PTSA | 10 | 1M Na₂SO₄ | 100 | 95 |
| Comparative Example 14 | decanoic acid | TBAC | PTSA | 10 | 2M Na₂SO₄ | 100 | 95 |
| Example 7 | decanoic acid | TBAC | PTSA | 10 | 1M H₂SO₄ | 100 | 40 |
| Example 8 | decanoic acid | TBAC | PTSA | 10 | 2M H₂SO₄ | 100 | 2 |
| Example 9 | decanoic acid | TBAC | PTSA | 10 | 3M H₂SO₄ | 100 | 0 |
| Example 10 | decanoic acid | TBAC | PTSA | 10 | 4M H₂SO₄ | 100 | 0 |
| Example 11 | decanoic acid | TOMAC | PTSA | 10 | 1M H₂SO₄ | 25 | 15 |
| Example 12 | decanoic acid | TOMAC | PTSA | 10 | 5M H₂SO₄ | 69 | 4 |

Abbreviations in Table 2 are the same as those in Table 1.

From the results in Table 2, it can be understood that by using an organic phase containing a hydrophobic deep eutectic solvent including an acidic hydrogen bond donor and a hydrogen bond acceptor and an organic acid, nickel is leached from a nickel ore, and by performing back extraction on a leachate by using sulfuric acid, a solution containing nickel sulfate can be obtained.

In addition, it can be understood that as the concentration of sulfuric acid increases, movement of Fe to the aqueous phase is further suppressed, and nickel sulfate having a higher purity can be obtained. In Comparative Examples 12 to 14 using Na₂SO₄, since extraction proportions of Fe are high, H⁺ included in an extraction solution is supposed to contribute to suppression of movement of Fe to the aqueous phase. TBAC has higher affinity to the aqueous phase than TOMAC, and as a result, an extraction proportion thereof increased.

### [Study 2 on nickel sulfate production method: Examples 13 to 16]

Nickel was leached from a nickel oxide ore using an organic phase containing components shown in Table 3. The obtained leachate was diluted with an organic solvent shown in Table 3. The organic solvent was used as shown in Table 3. Next, back extraction was performed by using an extraction solution shown in Table 3, and an aqueous phase was collected. A quantitative analysis of components included in the aqueous phase was performed, and each proportion of Ni and Fe that have moved from a leachate to the aqueous phase (aqueous phase extraction proportion) was obtained. Table 3 shows results together with results of Example 12.

**[Table 3]**

| | Deep Eutectic Solvent | | Organic Acid | | Back Extraction | | Aqueous Phase Extraction Proportion (mass%) | |
|---|---|---|---|---|---|---|---|---|
| | hydrogen bond donor | hydrogen bond acceptor | type | amount (mass%) | diluent | extraction solution | Ni | Fe |
| Example 12 | decanoic acid | TOMAC | PTSA | 10 | - | 5M H₂SO₄ | 69 | 4 |
| Example 13 | decanoic acid | TOMAC | PTSA | 10 | 50% toluene | 5M H₂SO₄ | 98 | 1 |
| Example 14 | decanoic acid | TOMAC | PTSA | 10 | 10% dodecane | 5M H₂SO₄ | 97 | 4 |
| Example 15 | decanoic acid | TOMAC | PTSA | 10 | 13% dodecane | 5M H₂SO₄ | 98 | 1 |
| Example 16 | decanoic acid | TOMAC | PTSA | 10 | 15% dodecane | 5M H₂SO₄ | 95 | 3 |

Abbreviations in Table 3 are the same as those in Table 1.

As shown in the results in Table 3, it can be understood that dilution of the leachate with the hydrophobic organic solvent in back extraction can suppress movement of Fe to the aqueous phase so that nickel sulfate having high purity can be thereby obtained. In addition, dilution of the leachate with the hydrophobic organic solvent enabled adjustment of the viscosity of the leachate. Accordingly, productivity can also be enhanced by diluting the leachate with the hydrophobic organic solvent.

From the foregoing results, it can be understood that the method for leaching nickel into the organic phase disclosed here enables easy production of nickel sulfate with a small amount of waste generation.

Specific examples of the present teaching have been described in detail hereinbefore, but are merely illustrative examples, and are not intended to limit the scope of claims. The techniques described in claims include various modifications and changes of the above exemplified specific examples.

## Claims

1. A method for leaching nickel into an organic phase, the method comprising the step of bringing a nickel ore into contact with the organic phase, wherein
the organic phase contains a hydrophobic deep eutectic solvent and an organic acid, the hydrophobic deep eutectic solvent including a hydrogen bond donor and a hydrogen bond acceptor,
the hydrogen bond donor is an acidic hydrogen bond donor, and
the organic acid is a strong acid.

2. The method according to claim 1, wherein a mass proportion of the organic acid with respect to the hydrophobic deep eutectic solvent is 9 mass% or more and 20 mass% or less.

3. The method according to claim 1 or 2, wherein the hydrogen bond donor is a fatty acid, and the hydrogen bond acceptor is a quaternary ammonium halide.

4. The method according to any one of claims 1 to 3, wherein the organic acid is an organic sulfonic acid compound.

5. A method for producing nickel sulfate, the method comprising the steps of:
obtaining a nickel leachate by the leaching method according to any one of claims 1 to 4 (S101); and
obtaining an aqueous phase containing nickel sulfate by performing back extraction on the nickel leachate using sulfuric acid (S102).

6. The method according to claim 5, wherein in the step of obtaining the aqueous phase (S102), a concentration of sulfuric acid is 2 mol/L or more.

7. The method according to claim 5 or 6, wherein in the step of obtaining the aqueous phase (S102), back extraction is performed after the nickel leachate is diluted with a hydrophobic organic solvent.
